# EUROPÄISCHE PATENTANMELDUNG

(11) **EP 2 495 693 A1**
(43) Veröffentlichungstag der Anmeldung: **05.09.2012**
(21) Anmeldenummer: 12157729.0
(22) Anmeldetag: 01.03.2012
(51) Int. Cl.: G06Q 10/06

(54) **Verfahren zur Verwaltung von Flurförderzeugflotten**

(30) Priorität: 04.03.2011 DE 102011013103; 04.04.2011 DE 102011016018
(71) Anmelder: STILL GmbH, 22113 Hamburg (DE)
(72) Erfinder: Bergmann, Ansgar, 22941 Bargteheide (DE)
(74) Vertreter: Geirhos, Johann

(57) **Zusammenfassung**

Bei einem Verfahren zur Verwaltung von Flurförderzeugflotten, bei dem Daten und Informationen über den Zustand der Flurförderzeuge durch eine Software ausgewertet und für einen Benutzer durch die Software dargestellt werden, erfolgen die Schritte:
- Darstellen einer Bildschirmansicht (1) mit einer Mehrzahl von Darstellungsbereichen (3,7,8,10),
- Gleichzeitiges Wiedergeben der Auswertungsergebnisse (4) einer Anzahl von Analyse- und Auswerteprozeduren der Software in zumindest jeweils einem Darstellungsbereich (3,7,8,10) der Bildschirmansicht.

## Beschreibung

Die vorliegende Erfindung betrifft Verfahren zur Verwaltung von Flurförderzeugflotten. Insbesondere betrifft die vorliegende Erfindung ein Verfahren zur Verwaltung von Flurförderzeugflotten, bei dem Daten und Informationen über den Zustand der Flurförderzeuge durch eine Software ausgewertet und für einen Benutzer durch die Software dargestellt werden.

Es ist bekannt, für die Verwaltung und Überwachung von Fahrzeugflotten, insbesondere von Flotten aus Flurförderzeugen, Daten verarbeitende Systeme einzusetzen. Diese Systeme ermöglichen in Unternehmen mit einer großen Anzahl von Flurförderzeugen, wie etwa einer Gabelstaplerflotte in einer Industrieproduktion oder Lagerbereichen, die Überwachung und Kontrolle der Fahrzeugzugänge/-abgänge sowie die Verwaltung des Zustandes der Fahrzeuge. Dabei stützen sich die Systeme im Regelfall auf eine Komponente, die in den Fahrzeugen angebracht ist und eine Kommunikationsvorrichtung umfasst, die Daten über den Fahrzeugzustand einer Datenbank sowie einer mit der Datenbank verknüpften Software auf einem Computer zur Verfügung stellt und übermittelt.

Über verschiedene Analyse- und Auswerteprozeduren der Software besteht für einen Benutzer dann die Möglichkeit, den Zustand der Flurförderzeugflotte zu erfassen, etwa beispielsweise Informationen, wann die nächste Wartung für wie viele Flurförderzeuge fällig wird, welcher Anteil der Flurförderzeuge wie viele Betriebsstunden erreicht hat, oder auch, wie der Verbrauch an Treibstoffen oder auch von elektrischer Energie im Fall von batteriebetriebenen Flurförderzeugen ist. Dabei können oftmals Vorgaben gemacht werden und Einstellungen vorgenommen werden. Z.B. kann ein Hinweis gegeben werden, wenn ein bestimmter Treibstoffverbrauch überschritten wird, ein bestimmtes Fahrzeug gehäuft Ausfallzeiten aufweist etc. Hier sind viele Fälle von Überwachungsvorgaben und auch Auswertemechanismen denkbar, die individuell an die Erfordernisse des Betreibers der Flurförderzeugflotte angepasst werden können.

Die Anzahl der hierfür vorzusehenden Eingabemöglichkeiten und auch Darstellungen von Auswertungen führt dazu, dass ein Benutzer sich umfassend mit den Optionen der Software befassen muss und über diese weitreichende Kenntnisse haben muss, nicht nur, um Einstellungen und Vorgaben vornehmen zu können, sondern auch, um die Auswertungen und Ergebnisse der verschiedenen Analyse- und Auswerteprozeduren überprüfen und sehen zu können. Beispielsweise muss der Benutzer einen großen Wissensstand haben, in welchen gestaffelten Untermenüs der Softwarebedienoberfläche er eine bestimmte Auswertung finden kann.

Anhand von einstellbaren Kriterien und Grenzwerten können in einem aus solchen Auswertungen zusammengestellten Bericht etwa Entscheidungskriterien angezeigt werden, welche Fahrzeuge ersetzt werden und bei welchen Fahrzeugen Wartungsmaßnahmen und Reparaturen vorgenommen werden sollen, um insgesamt die Wirtschaftlichkeit der Fahrzeugflotte zu erhöhen und die Kosten zu senken. Durch solche Informationen kann auch angezeigt werden, wenn sofortige Maßnahmen erforderlich sind, etwa, weil eine zu große Anzahl von Flurförderzeugen auszufallen droht oder bereits nicht einsatzfähig ist und eine Beeinträchtigung der Produktion droht. Der Benutzer muss jedoch selbst die für eine Übersicht über den Zustand der Flotte erforderlichen Informationen für einen solchen Bericht zusammenstellen.

Die Anzahl der zu erfassenden und zu überwachenden Flurförderzeuge kann sehr groß sein, beispielsweise bei großen Unternehmen teilweise mehrere Hundert Flurförderzeuge. Um den reibungslosen Ablauf von Prozessen wie Wartung sowie Ersatz und gleichzeitig die Verfügbarkeit der Fahrzeugflotte sicher zu stellen, ist daher ein schneller Überblick über die Situation der Fahrzeugflotte erforderlich. Durch die Anforderungen an eine hohe Verfügbarkeit der Flurförderzeugflotte muss eine solche Überwachung häufig erfolgen.

Zusätzlich werden oft auch Daten über die Fahrer der Fahrzeuge erfasst, die wichtig sind. Dies können etwa erfolgte Schulungen und Fortbildungsmaßnahmen sein sowie Berechtigungen und Zulassungen für bestimmte Tätigkeiten.

Nachteilig an diesem Stand der Technik ist, dass durch eine fehlerhafte Zusammenstellung und Auswahl der Informationen ein falsches Bild der Situation der Fahrzeugflotte wieder gegeben werden kann. Auch wird der Zeitaufwand für die Verwaltung der Fahrzeugflotte sehr groß und muss der Benutzer mit der Bedienung einer Vielzahl von Auswertungen für die Daten und Steuerbefehlen innerhalb der Software vertraut sein. Beispielsweise müssen Kenntnisse über die Menüführung und den Aufbau der Untermenüs sowie gegebenenfalls die Steuerungsbefehle der verschiedenen Analyse- und Auswerteprozeduren vorhanden sein. Wenn nun eine tägliche Überwachung und Überprüfung des Flottenzustandes erforderlich ist, führt dies zu einem erheblichen Zeitaufwand.

Es ist daher Aufgabe der vorliegenden Erfindung, eine Verfahren zur Verwaltung von Flurförderzeugflotten sowie ein Computersystem zur Verfügung zu stellen, mit denen es möglich ist, die oben genannten Nachteile zu vermeiden und auf einfache Art und Weise einen Überblick über die Situation der Flurförderzeugflotte zu gewähren.

Diese Aufgabe wird durch ein Verfahren zur Verwaltung von Fahrzeugflotten mit den Merkmalen des Anspruchs 1 sowie ein Computersystem mit den Merkmalen des Anspruchs 16 gelöst. Vorteilhafte Ausgestaltungen der Erfindung sind in den Unteransprüchen angegeben.

Diese Aufgabe wird durch ein Verfahren zur Verwaltung von Flurförderzeugflotten gelöst, bei dem Daten und Informationen über den Zustand der Flurförderzeuge durch eine Software ausgewertet und für einen Benutzer durch die Software dargestellt werden, und bei dem in einem ersten Schritt ein Darstellen einer Bildschirmansicht mit einer Mehrzahl von Darstellungsbereichen erfolgt. In einem zweiten Schritt werden gleichzeitig die Auswertungsergebnisse einer Anzahl von Analyse- und Auswerteprozeduren der Software in zumindest jeweils einem Darstellungsbereich der Bildschirmansicht wiedergegeben.

Dadurch erfolgt eine Bildschirmansicht, die im Regelfall als übliches Bildschirmfenster gestaltet ist, und die in Darstellungsbereiche aufgeteilt ist, entsprechend abgeteilten Bereichen des Bildschirmfensters. Dies ermöglicht in einer Gesamtübersicht die Auswertungsergebnisse für die gesamte Flurförderzeugflotte zu überblicken. Durch diese Darstellung ergibt sich eine Art Leitstandansicht, die einen Überblick über das gesamte System auf einer einzigen Bildschirmansicht ermöglicht. Es ist für eine tägliche oder schnelle Kontrolle nicht erforderlich, innerhalb der Software zu navigieren und die Auswertungsergebnisse zusammen zu stellen bzw. an verschiednen Stellen abzufragen. Die Vielzahl von Informationen kann übersichtlich dargestellt werden. Durch die Auswahl, welche Informationen bzw. Auswertungsergebnisse in welchem Darstellungsbereich dargestellt werden, und die Anordnung der Darstellungsbereiche innerhalb der Bildschirmansicht können besonders wichtige Auswertungsergebnisse hervorgehoben werden.

Es können die Auswertungsergebnisse einer Analyse- und Auswerteprozedur für aktive Fahrzeuge und/oder Softwareupdates der Flurförderzeuge und/oder anstehende Wartungen und/oder Zwischenüberprüfungen dargestellt werden.

Wartungen, Zwischenüberprüfungen, "Preshift Checks" und Updates von Betriebssoftware der Flurförderzeuge sind in einer Flurförderzeugflotte Vorgänge, deren Durchführung für eine hohe Betriebsbereitschaft der Flurförderzeugflotte mittelfristig und langfristig wichtig ist. Statusmeldungen über diese, wie die Anzahl der Flurförderzeug, für die solche Maßnahmen erforderlich sind, können dann vorteilhaft mit einem Blick kontrolliert werden.

In einer vorteilhaften Weiterbildung der Erfindung werden die Auswertungsergebnisse einer Analyse- und Auswerteprozedur in Form einer Listenansicht dargestellt, insbesondere als seitliche Listenansicht mit Meldungen.

Vorteilhaft kann die Listenansicht scrollbar und/oder priorisiert sein.

Die Priorisierung kann durch den Benutzer in dem System definiert werden. Dies ermöglicht eine Auflistung von System- und Fahrzeugmeldungen, die durch die Priorisierung in ihrer Dringlichkeit geordnet werden können. Durch eine entsprechende Reihenfolge können die wichtigsten Nachrichten und Meldungen immer im Zugriff liegend angeordnet werden. Auch sind ältere Auswertungsergebnisse bzw. System-und Fahrzeugmeldungen leicht durch Scrollen zugänglich.

Es können die Auswertungsergebnisse einer Analyse- und Auswerteprozedur für durchzuführende Aufgaben dargestellt werden.

Dadurch können aus den Auswertungsergebnissen folgende, vorzunehmende Maßnahmen automatisiert von der Software angezeigt werden. Dies kann so gestaltet sein, dass ein Benutzer in der Software einstellen und definieren kann, welche Aufgaben auf welche Ereignisse hin angezeigt werden sollen. Aufgaben können etwa z.B. die Zuweisung von Flurförderzeugen sein, insbesondere bei einem Neuzugang in der Flurförderzeugflotte die Zuweisung eines Flurförderzeug zu einem Fahrer, oder z.B. die Einrichtung einer Zugangsberechtigung in einem oder mehreren Flurförderzeugen für einen neu hinzugekommenen Fahrer.

Vorteilhaft werden die Auswertungsergebnisse einer Analyse- und Auswerteprozedur für Handlungsanweisungen dargestellt, insbesondere als Listendarstellung.

Neben einer reinen Anweisung, welche Maßnahmen vorzunehmen sind, kann dadurch ohne großen Aufwand eine Anleitung über die im einzelnen vorzunehmenden Schritte zugänglich gemacht werden.

In günstiger Ausgestaltung der Erfindung erfolgt abhängig von dem Überschreiten festgelegter Warnschwellen für Auswertungsergebnisse eine optische und/oder akustische Warnung.

Die Warnschwellen wie auch sonstige Parameter, von denen abhängig bestimmte Auswertungsergebnisse vorliegen sollen, können in der Software einstellbar sein, eventuell auch in Untermenüs, deren Aufsuchen einen detaillierteren Wissenstand über die Software erfordert. Die Warnfunktion wird aber auf der Ansicht der Bildschirmansicht wirksam und ermöglich dadurch immer ein sofortiges Erfassen, dass Problemen oder Zustände vorliegen, die ein sofortiges Handeln erfordern.

Es kann eine Ampeldarstellung erfolgen und als optische Warnung ein Rotlichtsignal dargestellt werden.

Diese intuitiv erfassbare Darstellung kann mit der Farbe Grün für "alles in Ordnung", so dass kein Handeln erforderlich ist, mit der Farbe Gelb entsprechend einem Warnungsstatus und der Farbe Rot durchgeführt werden. Dabei ist Rot ein Hinweis auf ein Ereignis, das eingetreten ist und sofortiges Handeln erfordert. Durch eine klare farbliche Signalisierung kann auf einen Blick erkannt werden, ob ein kritischer Vorgang eingetreten ist und sofortiges Handeln bei der Flurförderzeugflotte erforderlich ist. Zumindest in einem Darstellungsbereich können die Auswertungsergebnisse grafisch dargestellt werden.

Eine solche grafische Darstellung kann die wichtigsten Auswertungsergebnisse enthalten und automatisch aktualisiert werden.

In einer Weiterbildung des erfindungsgemäßen Verfahrens können zumindest in einem Darstellungsbereich weiterführende Informationen dargestellt werden.

Es kann eine Konsistenzprüfung der Auswertungsergebnisse erfolgen.

Die Software überprüft selbständig die Konsistenz aller erhaltenen sowie eingegebenen Daten. Durch Meldungen kann vermieden werden, dass nicht abgeschlossene Vorgänge unentdeckt bleiben, etwa wenn ein Flurförderzeug in der dargestellten Flurförderzeugflotte neu angelegt wird, aber für dieses Flurförderzeug kein Zugang definiert wird und das Fahrzeug somit nicht nutzbar wäre. Dies verhindert nicht schlüssige Zusammenhänge.

In einer Ausgestaltung der Erfindung können automatisch Maßnahmen als Reaktion auf die Auswertungsergebnisse gestartet werden.

Es können als Auswerteergebnisse Informationen über Fahrer von Flurförderzeugen, insbesondere über Berechtigungen und/oder Schulungen dargestellt werden.

Die Bildschirmansicht kann für tragbare Computervorrichtungen mit Netzwerkverbindung zur Verfügung gestellt werden.

Dadurch können die Bildschirmdarstellung oder Teile von dieser mit einer Auswahl von Darstellungsbereichen z.B. auf einem Smartphone zur Verfügung gestellt werden.

Es können ausgewählte Auswertungsergebnisse und/oder Warnhinweise als elektronische Kurznachricht, insbesondere SMS und/oder E-Mail, versandt werden.

Die Aufgabe wird auch durch ein Computersystem gelöst, auf dem ein zuvor beschriebenes Verfahren abläuft.

Insbesondere kann ein Unternehmensrechnernetz als Computersystem eingesetzt werden.

Das Computersystem weist die zuvor bereits dargestellten Vorteile auf.

Die Aufgabe wird auch durch ein entsprechendes Computerprogrammprodukt und ein Speichermedium gelöst, auf dem ein Computerprogrammprodukt gespeichert ist.

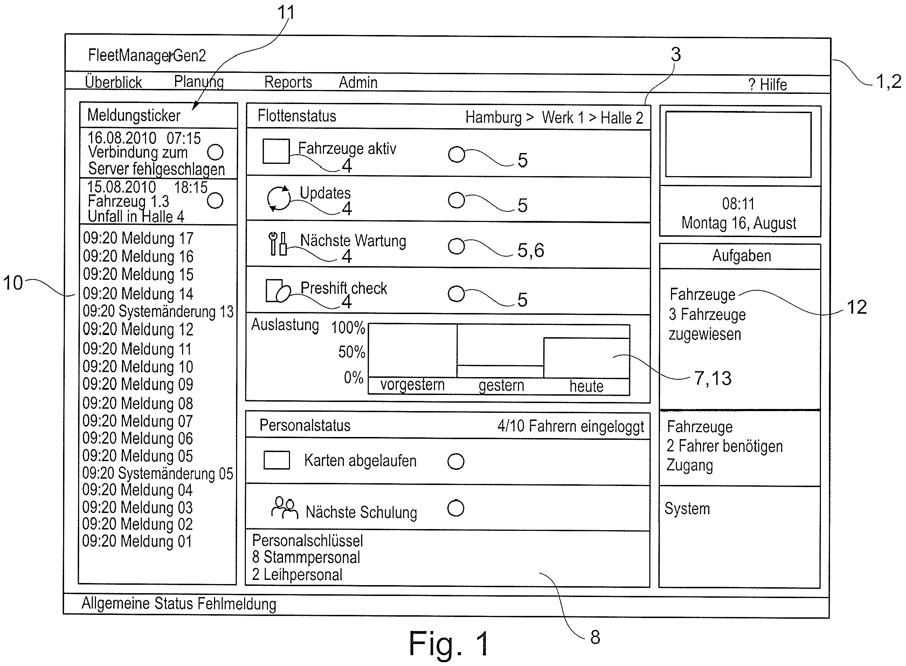

Weitere Vorteile und Einzelheiten der Erfindung werden anhand des in der schematischen Figur dargestellten Ausführungsbeispiels näher erläutert. Hierbei zeigt die Figur eine Darstellung einer Bildschirmansicht entsprechend dem erfindungsgemäßen Verfahren auf einem Bildschirm.

Ein Bildschirmbereich 1 in der Form eines Fensters 2 weist einen ersten Darstellungsbereich 3 auf, in dem ein Flottenstatus Auswertungsergebnisse 4 über aktive Fahrzeuge, Updates, nächste Wartungen und Preshift Checks gibt. Den Auswertungsergebnissen 4 ist jeweils eine Ampeldarstellung 5 mit jeweils einer Signalleuchte zugeordnet, die bei einem kritischen Zustand zu einem Bereich, hier dem Auswertungsergebnis 4 "nächste Wartung" ein Rotlichtsignal 6 anzeigt, das für einen Benutzer leicht erfassbar ist. Dadurch kann auf einen Blick erkannt werden, dass hier gehandelt werden muss. In einem zweiten Darstellungsbereich 7 ist eine grafische Darstellung 13 der Auslastung der Flurförderzeugflotte dargestellt, die täglich aktualisiert wird. In einem dritten Darstellungsbereich 8 werden Auswertungsergebnisse zu Informationen über die Bediener der Flurförderzeuge, insbesondere zu Berechtigungskarten und vorgesehenen Schulungen dargestellt. In einem vierten Darstellungsbereich 10 ist eine nach Priorität sortierte und scrollbare Listendarstellung 11 von Meldungen dargestellt. Schließlich sind in einem fünften Darstellungsbereich 12 anstehende Aufgaben dargestellt.

Durch das erfindungsgemäße Verfahren ergibt sich eine erhebliche Arbeitserleichterung für den Benutzer, da dieser mit einem Blick auf die Bildschirmdarstellung 1 erfassen kann, ob Probleme bei der Flurförderzeugflotte vorliegen, hier etwa durch das Rotlichtsignal 6 in Bezug auf anstehende Wartungen. Die Sicherheit der Bedienung wird vergrößert und der Zeitaufwand für die Überwachung der Flurförderzeugflotte vermindert sich.

## Patentansprüche

1. Verfahren zur Verwaltung von Flurförderzeugflotten, bei dem Daten und Informationen über den Zustand der Flurförderzeuge durch eine Software ausgewertet und für einen Benutzer durch die Software dargestellt werden mit den Schritten:
- Darstellen einer Bildschirmansicht (1) mit einer Mehrzahl von Darstellungsbereichen (3,7,8,10,12) und
- Gleichzeitiges Wiedergeben der Auswertungsergebnisse (4) einer Anzahl von Analyse- und Auswerteprozeduren der Software in zumindest jeweils einem Darstellungsbereich (3,7,8,10,12) der Bildschirmansicht.

2. Verfahren nach Anspruch 1,
**dadurch gekennzeichnet,**
**dass** die Auswertungsergebnisse (4) einer Analyse- und Auswerteprozedur für aktive Fahrzeuge und/oder Softwareupdates der Flurförderzeuge und/oder anstehender Wartungen und/oder Zwischenüberprüfungen dargestellt werden.

3. Verfahren nach Anspruch 1 oder 2,
**dadurch gekennzeichnet,**
**dass** die Auswertungsergebnisse (4) einer Analyse- und Auswerteprozedur in Form einer Listenansicht (11) dargestellt werden, insbesondere als seitliche Listenansicht (11) mit Meldungen.

4. Verfahren nach Anspruch 3,
**dadurch gekennzeichnet,**
**dass** die Listenansicht (11) scrollbar und/oder priorisiert ist.

5. Verfahren nach einem der Ansprüche 1 bis 4,
**dadurch gekennzeichnet,**
**dass** die Auswertungsergebnisse (4) einer Analyse- und Auswerteprozedur für durchzuführende Aufgaben dargestellt werden.

6. Verfahren nach einem der Ansprüche 1 bis 5,
**dadurch gekennzeichnet,**
**dass** die Auswertungsergebnisse (4) einer Analyse- und Auswerteprozedur für Handlungsanweisungen, insbesondere als Listendarstellung, dargestellt werden.

7. Verfahren nach einem der Ansprüche 1 bis 6,
**dadurch gekennzeichnet,**
**dass** abhängig von dem Überschreiten festgelegter Warnschwellen für Auswertungsergebnisse (4) eine optische und/oder akustische Warnung erfolgt.

8. Verfahren nach Anspruch 7,
**dadurch gekennzeichnet,**
**dass** eine Ampeldarstellung erfolgt und als optische Warnung ein Rotlichtsignal (6) dargestellt wird.

9. Verfahren nach einem der Ansprüche 1 bis 8,
**dadurch gekennzeichnet,**
**dass** zumindest in einem Darstellungsbereich die Auswertungsergebnisse grafisch dargestellt werden.

10. Verfahren nach einem der Ansprüche 1 bis 9,
**dadurch gekennzeichnet,**
**dass** zumindest in einem Darstellungsbereich weiterführende Informationen dargestellt werden.

11. Verfahren nach einem der Ansprüche 1 bis 10,
**dadurch gekennzeichnet,**
**dass** eine Konsistenzprüfung der Auswertungsergebnisse erfolgt.

12. Verfahren nach einem der Ansprüche 1 bis 11,
**dadurch gekennzeichnet,**
**dass** automatisch Maßnahmen als Reaktion auf die Auswertungsergebnisse gestartet werden.

13. Verfahren nach einem der Ansprüche 1 bis 12,
**dadurch gekennzeichnet,**
**dass** als Auswerteergebnisse (4) Informationen über Fahrer von Flurförderzeugen, insbesondere über Berechtigungen und/oder Schulungen, dargestellt werden.

14. Verfahren nach einem der Ansprüche 1 bis 13,
**dadurch gekennzeichnet,**
**dass** die Bildschirmansicht für tragbare Computervorrichtungen mit Netzwerkverbindung zur Verfügung gestellt wird.

15. Verfahren nach einem der Ansprüche 1 bis 14,
**dadurch gekennzeichnet,**
**dass** die ausgewählte Auswertungsergebnisse und/oder Warnhinweise als elektronische Kurznachricht, insbesondere SMS und/oder E-Mail, versandt werden.

16. Computersystem auf dem ein Verfahren nach einem der Ansprüche 1 bis 15 abläuft.

17. Computerprogrammprodukt, das ablaufend auf einem Computersystem nach Anspruch 16 ein Verfahren nach einem der Ansprüche 1 bis 15 durchführt.

18. Speichermedium auf dem ein Computerprogrammprodukt nach Anspruch 17 gespeichert ist.
